# EUROPÄISCHE PATENTSCHRIFT

(11) **EP 3 120 741 B1**
(45) Veröffentlichungstag und Bekanntmachung des Hinweises auf die Patenterteilung: **04.04.2018**
(21) Anmeldenummer: 15178212.5
(22) Anmeldetag: 24.07.2015
(51) Int. Cl.: A47J 27/00, A47J 43/046, A47J 43/07

(54) **KÜCHENMASCHINE SOWIE VERFAHREN ZUM BETRIEB EINER KÜCHENMASCHINE**
METHOD FOR OPERATING A KITCHEN APPLIANCE AND KITCHEN APPLIANCE
ROBOT MENAGER ET PROCEDE DE FONCTIONNEMENT D'UN ROBOT MENAGER

(43) Veröffentlichungstag der Anmeldung: 25.01.2017
(73) Patentinhaber: Vorwerk & Co. Interholding GmbH, 42275 Wuppertal (DE)
(72) Erfinder: STRANG, Benjamin, 42651 Solingen (DE)
(74) Vertreter: Müller, Enno

(56) Entgegenhaltungen:
- WO-A1-2014/083022
- WO-A1-2016/145430
- DE-A1-102013 006 576
- DE-U1-202007 008 843
- US-A1- 2007 262 971
- US-A1- 2013 044 042

## Beschreibung

### Gebiet der Technik

Die Erfindung betrifft zunächst ein Verfahren zum Betrieb einer elektromotorisch angetriebenen Küchenmaschine zum Zubereiten eines Zubereitungsgutes, wobei das Zubereitungsgut durch einen oder mehrere aufeinanderfolgende Zubereitungsschritte zubereitet wird, wobei ein Nutzer der Küchenmaschine eine einen Betriebsparameter der Küchenmaschine und/oder einen Zubereitungsparameter des Zubereitungsgutes betreffende Information von der Küchenmaschine empfängt und/oder an die Küchenmaschine übermittelt.

Darüber hinaus betrifft die Erfindung eine elektrisch angetriebene Küchenmaschine mit einem Zubereitungsgefäß, einem dem Zubereitungsgefäß zugeordneten Rührwerk und/oder Heizelement und einer Kommunikationseinrichtung zur Kommunikation mit einem Nutzer der Küchenmaschine, insbesondere zum Übermitteln einer einen Betriebsparameter der Küchenmaschine und/ oder einen Zubereitungsparameter eines Zubereitungsgutes betreffende Information.

Ebenso betrifft die Erfindung ein System aus einer Küchenmaschine und einer separat zu der Küchenmaschine ausgebildeten tragbaren Bilderzeugungseinrichtung.

### Stand der Technik

Küchenmaschinen der in Rede stehenden Art sind bekannt. Diese weisen in der Regel ein von der Küchenmaschine abnehmbares Zubereitungsgefäß auf, in welchem ein Rührwerk angeordnet ist. Das Rührwerk wird über einen küchenmaschinenseitigen Elektromotor angetrieben, wozu an der Schnittstelle zwischen Zubereitungsgefäß und küchenmaschinenseitiger Aufnahme eine Kupplung vorgesehen ist. Zur Regelung des das Rührwerk antreibenden Elektromotors ist in der Regel ein Drehzahlsteller vorgesehen, welcher gegebenenfalls zusammen mit weiteren Stellern sowie Anzeigeelementen in einem separaten Displaybereich der Küchenmaschine angeordnet ist. Des Weiteren ist es bekannt, das Zubereitungsgefäß mittels einer Heizeinrichtung zu beheizen. Beispielsweise bildet der Gefäßboden ein elektrisch ansteuerbares Heizelement. Eine derartige Küchenmaschine ist beispielsweise aus der Druckschrift WO 2003/075727 A1 bekannt.

Aus der DE 10 2013 006576 A1 ist ein Kühl- und/oder Gefriergerät bekannt, bei welchem ein Anzeigegerät vorgesehen ist, das unmittelbar an dem Kühl- und/ oder Gefriergerät angeordnet ist. Es kann in einem Betriebszustand durch ein Verschlusselement verdeckt sein und in einem weiteren Betriebszustand auch bei geschlossenem Verschlusselement durch einen Nutzer sichtbar sein.

### Zusammenfassung der Erfindung

Ausgehend von dem vorgenannten Stand der Technik ist es Aufgabe der Erfindung, die Nutzung der Küchenmaschine für einen Nutzer noch komfortabler zu gestalten. Insbesondere sollen Alternativen zu den bekannten Stell- und Anzeigeelementen geschaffen werden.

Zur Lösung der vorgenannten Aufgabe schlägt die Erfindung zunächst ein Verfahren zum Betrieb einer elektromotorisch angetriebenen Küchenmaschine vor, bei welchem die einen Betriebsparameter der Küchenmaschine und/ oder einen Zubereitungsparameter des Zubereitungsgutes betreffende Information mit Hilfe einer separat zu der Küchenmaschine ausgebildeten tragbaren Bilderzeugungseinrichtung, insbesondere einer vor einem Auge getragenen brillenartigen Konstruktion, in das Sichtfeld des Nutzers projiziert wird, wenn der Nutzer in einem definierten Winkelbereich auf die Küchenmaschine blickt, wobei sich die Information mit dem Sichtfeld überlagert.

Anstatt mittels eines Displays, welches in die Gehäuseoberfläche integriert ist, werden die Informationen über Betriebsparameter oder Zubereitungsparameter nun mittels der Bilderzeugungseinrichtung in das Sichtfeld des Nutzers projiziert, so dass der Nutzer die Informationen unmittelbar in seinem Sichtfeld angezeigt bekommt, wo sich ebenfalls auch die Küchenmaschine befindet, so dass der Nutzer den Eindruck hat, dass die Information, wie üblich, auf einem Teilbereich, insbesondere Display, der Küchenmaschine erscheint. Darüber hinaus ist auch möglich, die Information so in das Sichtfeld des Nutzer zu projizieren, das der Nutzer den Eindruck hat, die Information befindet sich in der Nähe der Küchenmaschine oder in der Umgebung ihrer Komponenten wie Topf und Rührmesser. Im Gegensatz zum Stand der Technik ist es jedoch nicht erforderlich, dass die Küchenmaschine selbst eine aktive Anzeigeeinrichtung, wie beispielsweise das vorgenannte Display, aufweist. Die Bilderzeugungseinrichtung trägt der Nutzer vorteilhaft im Sichtfeld seines Auges bzw. seiner Augen, so dass die von der Bilderzeugungseinrichtung ausgehende Information unmittelbar in das auf die Küchenmaschine gerichtete Sichtfeld des Nutzers projiziert wird. Darüber hinaus ist auch möglich, dass Informationen in das Sichtfeld des Nutzers projiziert werden, wenn die Küchenmaschine nicht im Sichtfeld des Benutzers ist. Ein Beispiel für eine Information, die eingeblendet wird, ohne dass die Küchenmaschine im Sichtfeld des Kunden ist, ist die verbleibende Zeit bis zur Fertigstellung des Garvorgangs oder eine Zubereitungsinformation für die nächste Rezeptphase.

Besonders vorteilhaft ist die Bilderzeugungseinrichtung dabei nach der Art eines Brillenrahmens vor dem Auge des Nutzers angeordnet oder an einem solchen Brillenrahmen befestigt. Im Sinne der Erfindung kann beispielsweise eine Bilderzeugungseinrichtung gemäß US 2013/0044042 A1 verwendet werden. Die Funktionsweise der tragbaren Bilderzeugungseinrichtung basiert auf dem Prinzip der sogenannten "augmented reality" (erweiterte Realität), wobei im Sichtfeld des Nutzers ein ein reelles Bild überlagerndes zweites Bild erscheint. Dieses von der Bilderzeugungseinrichtung erzeugte zweite Bild kann beispielsweise zusätzliche virtuelle Informationen enthalten, die über die realen Informationen innerhalb des Sichtfeldes des Nutzers hinausgehen. Dadurch wird die Menge der für den Nutzer in dem Sichtfeld vorhandenen realen Informationen um zusätzliche, virtuelle Informationen ergänzt, wodurch der Nutzer bei der Verwendung der Küchenmaschine für die Zubereitung eines Zubereitungsgutes eine größere Anzahl von Informationen zur Verfügung hat.

Zudem erübrigt sich durch die Erfindung die Ausbildung eines üblichen Displays auf der Gehäuseoberfläche der Küchenmaschine beziehungsweise die Einbettung eines Displays in die Gehäuseoberfläche. Dadurch reduziert sich nicht zuletzt auch die Anzahl der auf der Gehäuseoberfläche vorhandenen Spalten, in welchen sich Schmutz sammeln kann. Die Reinigung der Gehäuseoberfläche ist dadurch für den Nutzer besonders schnell und komfortabel möglich.

Es wird vorgeschlagen, dass die Bilderzeugungseinrichtung die Information mittels einer Lichtquelle auf eine Projektionsfläche der Küchenmaschine, auf eine vor dem Auge getragene und somit im Sichtfeld liegende, transparente Fläche und/oder in ein Auge des Nutzers projiziert, insbesondere örtlich zugeordnet einem Teilbereich der Küchenmaschine im Sichtfeld des Nutzers, welcher dem Betriebsparameter der Küchenmaschine und/oder dem Zubereitungsparameter des Zubereitungsgutes der Art nach zugeordnet ist. Zur Projektion der Information in das Sichtfeld des Nutzers weist die Bilderzeugungseinrichtung eine Lichtquelle zur Emission von die Information darstellendem Licht auf sowie vorzugsweise ein oder mehrere optische Elemente, beispielsweise ein Umlenk-Prisma. Darüber hinaus kann die Bilderzeugungseinrichtung wahlweise zusätzlich auch eine Kamera aufweisen, um Bilder der Umgebung beziehungsweise des Sichtfeldes aufzunehmen, so dass der Nutzer sowohl die Umgebung/ das Sichtfeld als auch die zusätzlich in das Sichtfeld projizierte Information anstelle einer unmittelbaren Wahrnehmung virtuell angezeigt bekommt. Dabei kann die Information entweder in das Sichtfeld des Nutzers projiziert werden, beispielsweise auf einen Teilbereich der Küchenmaschine, oder direkt in das Auge des Nutzers, so dass dieser den Eindruck erlangt, dass die Information tatsächlich auf dem Gehäuse der Küchenmaschine angezeigt wird. Das Bild wird dabei direkt auf die Netzhaut des Auges projiziert, wobei der Nutzer beispielsweise den Eindruck hat, dass sich die Information real vor seinem Auge befindet. Die Information wird stets vorteilhaft so projiziert, dass die Information auf oder direkt neben einem solchen Teilbereich der Küchenmaschine erscheint, welcher mit dem entsprechenden Betriebsparameter der Küchenmaschine oder dem Zubereitungsparameter des Zubereitungsgutes verbunden ist. Beispielsweise kann der Betriebsparameter der Küchenmaschine die Temperatur einer Heizeinrichtung sein, welche dem Zubereitungsgefäß zugeordnet ist. In diesem Fall wird der Betriebsparameter, d.h. die Temperatur der Heizeinrichtung, direkt auf oder neben dem Zubereitungsgefäß abgebildet. Gleiches gilt ebenso für Zubereitungsparameter des Zubereitungsgutes, beispielsweise einer Temperatur des in dem Zubereitungsgefäß enthaltenen Zubereitungsgutes. Die Projektionsfläche der Küchenmaschine ist vorteilhaft ein Teilbereich des Gehäuses, in welchem üblicherweise ein Display des Gehäuses angeordnet wird. Alternativ oder zusätzlich kann die Küchenmaschine auch Projektionsflächen in weiteren Teilbereichen des Gehäuses aufweisen und/ oder an dem Zubereitungsgefäß, einem Dampfgaraufsatz für das Zubereitungsgefäß oder ähnlichem. Dadurch wird der Betrieb der Küchenmaschine besonders intuitiv gestaltet. Die Information wird nicht mehr nur auf dem üblichen für ein Display vorgesehenen Teilbereich des Maschinengehäuses angezeigt, sondern vorteilhaft in unmittelbarer Nähe zu der jeweiligen Komponente der Küchenmaschine, die inhaltlich zu der Information in Beziehung steht, z.B. Zubereitungsgefäß zur Anzeige der Temperatur der Heizeinrichtung. In einem ausgeschalteten Zustand der Bilderzeugungseinrichtung und/oder der Küchenmaschine ist das Gehäuse der Küchenmaschine weitestgehend als geschlossene Oberfläche ohne physisch vorhandene Stell- und/oder Anzeigeeinrichtungen wahrzunehmen. Sofern die Küchenmaschine hingegen mittels der tragbaren Bilderzeugungseinrichtung betrachtet wird, erscheinen die Informationen innerhalb des Sichtfeldes des Nutzers auf der Gehäuseoberfläche, so dass der Eindruck eines dort angeordneten aktiven Displays entsteht. Sofern die Projektionsfläche zur Anzeige der virtuellen Informationen örtlich den korrespondierenden Einrichtungen der Küchenmaschine, beispielsweise dem Zubereitungsgefäß oder dem Rührwerk, zugeordnet ist, kann derjenige Teilbereich der Küchenmaschine, in welchem üblicherweise ein aktives Display angeordnet ist, stattdessen zur großformatigen Anzeige einer Uhrzeit oder ähnlichem verwendet werden, was eine besonders großformatige Darstellung und somit eine gute Lesbarkeit ermöglicht. Dadurch, dass die Bilderzeugungseinrichtung ein klassisches aktives Display und ggf. auch einen Drehsteller oder ähnliches ersetzt, kann das Gehäuse der Küchenmaschine geschlossen ausgebildet werden und ist somit robuster als ein Gehäuse, welches Aussparungen für Stell- und/oder Anzeigeeinrichtungen aufweist. Die geschlossene Gehäuseoberfläche ist in der Regel frei von Unebenheiten und somit leichter zu reinigen, da sich kein Schmutz in Fugen des Displayrahmens oder hinter Stelleinrichtungen sammeln kann. Sofern das Gehäuse Schmutz oder ähnliches aufweist, wird die Anzeige der Information nicht verhindert, da beim Einsatz der Bilderzeugungseinrichtung entsprechende Verschmutzungen durch die Projektion der Information überlagert werden. Des Weiteren entfällt in der Herstellung der Küchenmaschine das Fügen von Display und Küchenmaschinengehäuse, so dass der Fertigungsprozess diesbezüglich vereinfacht ist.

Des Weiteren wird vorgeschlagen, dass der Betriebsparameter der Küchenmaschine und/oder der Zubereitungsparameter des Zubereitungsgutes mittels eines Sensors der Küchenmaschine ermittelt und an die Bilderzeugungseinrichtung übermittelt wird. Die Bilderzeugungseinrichtung steht somit in Kommunikationsverbindung mit einem Sensor der Küchenmaschine, welcher den Betriebsparameter beziehungsweise den Zubereitungsparameter detektiert und an einen Prozessor der Bilderzeugungseinrichtung übermittelt. Der Prozessor wertet die Sensorsignale aus, indem er diese mit entsprechenden Referenzsignalen vergleicht und beispielsweise aus einer in einem Datenspeicher der Bilderzeugungseinrichtung hinterlegten Tabelle Steuerbefehle zur entsprechenden Ansteuerung der Lichtquelle beziehungsweise mehrerer Lichtquellen entnimmt. Daraufhin steuert der Prozessor die Lichtquelle der Bilderzeugungseinrichtung derart, dass ein der Information entsprechendes Lichtsignal emittiert wird. Der Sensor der Küchenmaschine kann ein Drehzahlmesser, ein Temperatursensor, eine Wägeeinrichtung oder ähnliches sein.

Es wird vorgeschlagen, dass der Betriebsparameter der Küchenmaschine eine Drehzahl und/oder eine Dreheinrichtung eines Rührwerkes, eine Temperatur einer Heizeinrichtung und/oder eine Zeitangabe ist. Darüber hinaus wird vorgeschlagen, dass der Zubereitungsparameter des Zubereitungsgutes eine Temperatur und/oder ein Gewicht des Zubereitungsgutes und/oder ein Zubereitungsschritt eines Rezeptes zur Zubereitung des Zubereitungsgutes ist. Der Begriff "Betriebsparameter" umfasst dabei alle Parameter der Küchenmaschine, welche den Betrieb einer technischen Einrichtung der Küchenmaschine betreffen, beispielsweise den Betrieb des Rührwerkes, der Heizeinrichtung oder ähnliches. Das Rührwerk kann beispielsweise mit einer bestimmten Drehzahl und in eine bestimmte Drehrichtung arbeiten. Darüber hinaus kann die Heizeinrichtung, welche beispielsweise dem Zubereitungsgefäß zugeordnet ist, auf eine bestimmte Temperatur aufgeheizt werden. Darüber hinaus kann die Küchenmaschine auch eine Uhr aufweisen, welche als Betriebsparameter eine Zeitangabe ausgibt. Diese Zeitangabe kann eine Zeitspanne bis zu dem Beginn eines nachfolgenden Zubereitungsschrittes oder bis zu einer Beendigung eines aktuell durchgeführten Zubereitungsschrittes angeben. In Bezug auf die Zubereitungsparameter des Zubereitungsgutes sind all jene Parameter gemeint, welche eine Eigenschaft des Zubereitungsgutes betreffen. Dies kann beispielsweise die tatsächliche Temperatur des Zubereitungsgutes innerhalb des Zubereitungsgefäßes sein, ein Gewicht des Zubereitungsgutes oder ähnliches. Darüber hinaus wird darunter auch ein Zubereitungsschritt eines Rezeptes verstanden, welches zur Zubereitung des Zubereitungsgutes dient. Ein solcher Zubereitungsschritt kann beispielsweise eine Anweisung an den Nutzer der Küchenmaschine enthalten, eine bestimmte Menge eines Zubereitungsgutes in das Zubereitungsgefäß einzubringen. Diese dargestellten Informationen dienen allesamt der Unterrichtung des Nutzers über den aktuellen Betrieb der Küchenmaschine beziehungsweise den aktuellen Zustand des Zubereitungsgutes beziehungsweise zur Aufforderung des Nutzers für einen Zubereitungsschritt der Küchenmaschine aktiv tätig zu werden.

Des Weiteren wird vorgeschlagen, dass die Bilderzeugungseinrichtung eine Information auf eine einen Berührungssensor aufweisende Projektionsfläche der Küchenmaschine oder auf eine einen Berührungssensor aufweisende vor dem Auge getragene und somit im Sichtfeld liegende, transparente Fläche projiziert, und dass der Nutzer die Küchenmaschine durch Berührung der Projektionsfläche steuert. Gemäß dieser Ausgestaltung dient die Projektionsfläche nicht nur zur Anzeige einer Information für den Nutzer, sondern vielmehr auch als Eingabefläche für die Übermittlung eines Befehls des Nutzers an die Küchenmaschine. Mittels der Projektionsfläche übermittelt der Nutzer eine einen Betriebsparameter der Küchenmaschine und/oder einen Zubereitungsparameter des Zubereitungsgutes betreffende Information an die Küchenmaschine, insbesondere an eine Auswerte- und Steuereinrichtung der Küchenmaschine. Die Projektionsfläche ersetzt somit die bei üblichen Küchenmaschinen erforderlichen Stelleinrichtungen, beispielsweise Taster, Drehknöpfe oder ähnliches. Der Projektionsfläche ist ein Berührungssensor zugeordnet, welcher eine Berührung der Projektionsfläche durch den Nutzer erkennt und daraufhin eine bestimmte Reaktion auslöst. Der Berührungssensor kann beispielsweise ein kapazitiver Berührungssensor sein. Mittels der Bilderzeugungseinrichtung werden virtuelle Bilder entsprechender Stelleinrichtungen auf das Gehäuse der Küchenmaschine projiziert, so dass der Nutzer erkennt, welchen Teilbereich des Gehäuses er zur Tätigung einer bestimmten Eingabe berühren muss. Die projizierten Bilder können dem Erscheinungsbild üblicher Taster, Drehschalter oder ähnlichem nachempfunden sein, so dass der Nutzer deren Funktion unmittelbar erkennt. Dabei können die Funktionen der Teilbereiche des Gehäuses auch dynamisch geändert werden, beispielsweise kann ein und derselbe Teilbereich während eines ersten Zubereitungsschrittes des Rezeptes zum Einstellen einer Garzeit verwendet werden, und während eines zweiten Zubereitungsschrittes zum Umschalten der Drehrichtung des Rührwerkes der Küchenmaschine. Die Projektionsfläche erfüllt somit gleichzeitig zwei Funktionen einer Kommunikationseinrichtung. Zum einen werden dem Nutzer Informationen zur Unterrichtung über einen aktuellen Betriebsparameter der Küchenmaschine und/oder einen aktuellen Zubereitungsparameter des Zubereitungsgutes übermittelt; zum anderen wird dem Nutzer eine Eingabeeinrichtung zur Verfügung gestellt, mit deren Hilfe er Informationen an die Küchenmaschine übermitteln kann, um beispielsweise aktiv in die Zubereitung eines Zubereitungsgutes einzugreifen.

Darüber hinaus wird mit der Erfindung vorgeschlagen, dass die Bilderzeugungseinrichtung die Information in Abhängigkeit von einem Blickwinkel des Nutzers relativ zu der Küchenmaschine projiziert. Vorteilhaft wird dabei der Ort der projizierten Information auf der Küchenmaschine an den Blickwinkel des Nutzers angepasst. Sofern der Nutzer beispielsweise seitlich auf das Gehäuse der Küchenmaschine blickt, wird die Information seitlich an dem entsprechenden Teilbereich der Küchenmaschine angezeigt, während die Information bei einem Blick von oben auf die Küchenmaschine gegebenenfalls in dem geöffneten Rührgefäß oder ähnlichem angezeigt wird. In dem Fall, dass es sich bei der angezeigten Information um einen Zubereitungsschritt eines Rezeptes handelt, kann die Information im Sinne eines sogenannten "guided cookings" auch neben der Küchenmaschine angezeigt werden. Insbesondere kann dabei beispielsweise auch eine Information über ein Gewicht einer aktuell in das Zubereitungsgefäß eingefüllten Zutat in ein virtuelles Rezept eingeblendet werden, so dass der Nutzer automatisch eine Information darüber erhält, inwiefern das gewünschte Gewichtsziel erreicht ist. Um mit Hilfe der Bilderzeugungseinrichtung die Informationen blickwinkelabhängig so in das Sichtfeld des Nutzers einzublenden, dass diese örtlich in Bezug zu einer bestimmten Einrichtung der Küchenmaschine stehen, müssen Ort und Orientierung der Küchenmaschine im Sichtfeld des Nutzers beziehungsweise der Bilderzeugungseinrichtung bestimmt werden. Dazu können vorteilhaft die Positionen von an dem Gehäuse der Küchenmaschine angeordneten Markierungselementen bestimmt werden. Diese Markierungselemente können in einem bestimmten Abstand zueinander an dem Gehäuse angeordnet sein sowie eine definierte Höhe und Breite aufweisen. Eine Detektionseinrichtung, beispielsweise eine Kamera der Bilderzeugungseinrichtung, wertet diese Markierungselemente in Bezug auf deren Geometrie und Anordnung an der Küchenmaschine aus und bestimmt daraus den Blickwinkel des Nutzers beziehungsweise der Bilderzeugungseinrichtung auf die Projektionsfläche der Küchenmaschine. Durch die vorgegebene Geometrie und Position der Markierungselemente und entsprechende 2D-Bildmerkmale kann die Positionsbestimmung der Markierungselemente und damit der gesamten Küchenmaschine auf Algorithmen aufbauen, die Korrespondenzen zwischen 2D-Merkmalspositionen der Markierungselemente und 3D-Modellpunkten der Küchenmaschine herstellen.

Neben dem zuvor erläuterten erfindungsgemäßen Verfahren wird ebenso eine elektrisch angetriebene Küchenmaschine vorgeschlagen, welche ein Zubereitungsgefäß, ein dem Zubereitungsgefäß zugeordnetes Rührwerk und/oder Heizelement und eine Kommunikationseinrichtung zur Kommunikation mit einem Nutzer der Küchenmaschine, insbesondere zum Übermitteln einer einen Betriebsparameter der Küchenmaschine und/oder einen Zubereitungsparameter eines Zubereitungsgutes betreffenden Information, aufweist, wobei die Kommunikationseinrichtung eine einen Berührungssensor aufweisende Projektionsfläche zur Anzeige von Informationen aufweist, und wobei der Kommunikationseinrichtung mindestens ein Markierungselement zur Bestimmung einer räumlichen Orientierung der Küchenmaschine, insbesondere relativ zu einer externen Bilderzeugungseinrichtung, zugeordnet ist. Die vorgeschlagene Küchenmaschine weist somit eine Kommunikationseinrichtung auf, welche einerseits eine Projektionsfläche mit Berührungssensoren aufweist, und andererseits Markierungselemente, welche eine Position relativ zu der Projektionsfläche definieren. Die Markierungselemente können von einer Bilderzeugungseinrichtung genutzt werden, um einen aktuellen Blickwinkel eines Nutzers auf die Küchenmaschine festzustellen und infolgedessen die Darstellung der Information auf der Projektionsfläche der Küchenmaschine zu variieren. Beispielsweise wird die Information abhängig von dem Blickwinkel des Nutzers auf unterschiedlichen Teilbereichen des Maschinengehäuses angeordnet oder auf eine dem Blickwinkel entsprechende natürliche Art und Weise verändert, beispielsweise verzerrt.

Des Weiteren ist vorgesehen, dass die Kommunikationseinrichtung mehrere in einem Abstand angeordnete Markierungselemente aufweist, welche jeweils eine Mehrzahl von zwei- oder dreidimensional nebeneinander angeordneten Markierungsteilelementen aufweisen. Die Markierungselemente sind in einem Abstand zueinander angeordnet und belegen eine Fläche mit einer definierten Höhe und einer definierten Breite. Das Markierungselement besteht dabei vorteilhaft aus einem Raster regelmäßig nebeneinander angeordneter Markierungsteilelemente. Diese Markierungsteilelemente können beispielsweise aktiv leuchtende Punkte sein, beispielsweise in grüner Farbe, deren Größe abhängig von der Position innerhalb des Rasters variiert. Eine Vorzugsrichtung der Markierungselemente kann beispielsweise über die Richtung kleiner werdender Markierungsteilelemente gegeben sein. Über das Farbmerkmal sind die Markierungselemente mittels einer Detektionseinrichtung der Bilderzeugungseinrichtung, beispielsweise einer Kamera, zu erkennen, so dass deren Lage und Orientierung zuverlässig bestimmt werden kann.

Erfindungsgemäß ist zudem ein System aus einer Küchenmaschine, insbesondere einer zuvor vorgeschlagenen Küchenmaschine, und einer separat dazu ausgebildeten tragbaren Bilderzeugungseinrichtung, insbesondere einem einem Auge eines Nutzers der Küchenmaschine zugeordneten Projektor, vorgesehen, wobei die Küchenmaschine ein Zubereitungsgefäß, ein dem Zubereitungsgefäß zugeordnetes Rührwerk und/oder Heizelement und eine Kommunikationseinrichtung zur Kommunikation mit einem Nutzer der Küchenmaschine und/oder mit der Bilderzeugungseinrichtung aufweist, wobei die Kommunikationseinrichtung eine Projektionsfläche zur Anzeige einer einen Betriebsparameter der Küchenmaschine und/oder einen Zubereitungsparameter eines Zubereitungsgutes betreffenden, von der Bilderzeugungseinrichtung projizierten Information aufweist. In Bezug auf dieses vorgeschlagene System aus Küchenmaschine und Bilderzeugungseinrichtung ergeben sich die zuvor in Bezug auf das Verfahren erläuterten Vorteile.

Schließlich wird auch in Bezug auf das erfindungsgemäße System vorgeschlagen, dass die Küchenmaschine mindestens ein Markierungselement zur räumlichen Orientierung der Bilderzeugungseinrichtung relativ zu der Küchenmaschine, insbesondere relativ zu der Projektionsfläche, aufweist, wobei die Bilderzeugungseinrichtung eine Detektionseinrichtung zur Detektion des Markierungselementes, eine Auswerte- und Steuereinrichtung zur Ermittlung der Orientierung der Bilderzeugungseinrichtung relativ zu dem Markierungselement und eine Lichtquelle zur optischen Emission der Information aufweist. Die Bilderzeugungseinrichtung kann nach der Art eines Brillengestells einem Auge eines Nutzers der Küchenmaschine zugeordnet sein, so, dass sich die Bilderzeugungseinrichtung in dem Sichtfeld des Auges befindet. Vorzugsweise weist die Bilderzeugungseinrichtung einen Prozessor zur Ermittlung der Orientierung der Bilderzeugungseinrichtung relativ zu der Küchenmaschine auf. In Abhängigkeit des Ergebnisses steuert die Auswerte- und Steuereinrichtung die Lichtquelle derart, dass die zu projizierende Information entsprechend dieser Orientierung auf die Projektionsfläche der Küchenmaschine oder in das Auge des Nutzers projiziert wird. Gegebenenfalls kann das von der Lichtquelle emittierte, die Information enthaltene Licht mittels optischer Elemente umgelenkt und/oder fokussiert werden. Denkbar sind hier beispielsweise Linsen, Prismen, Spiegel oder ähnliches.

### Kurze Beschreibung der Zeichnungen

Im Folgenden wird die Erfindung anhand von Ausführungsbeispielen näher erläutert. Es zeigen:
- Fig. 1: eine erfindungsgemäße Küchenmaschine in einer perspektivischen Ansicht,
- Fig. 2: ein System aus einer Küchenmaschine und einer Bilderzeugungseinrichtung,
- Fig. 3: die Bilderzeugungseinrichtung während einer Detektion von Markierungselementen der Küchenmaschine,
- Fig. 4: die Küchenmaschine mit auf Projektionsflächen projizierten Informationen,
- Fig. 5: eine Küchenmaschine mit auf Projektionsflächen projizierten Informationen,
- Fig. 6: eine Küchenmaschine mit auf Projektionsflächen projizierten Informationen,
- Fig. 7: die Küchenmaschine mit Berührungssensoren aufweisenden Projektionsflächen.

### Beschreibung der Ausführungsformen

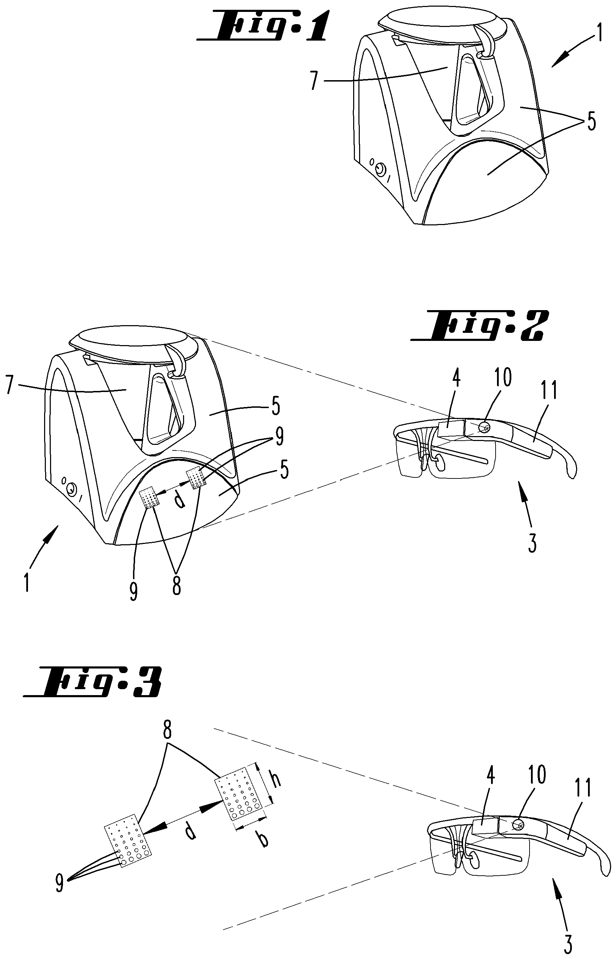

Figur 1 zeigt eine Küchenmaschine 1, welche hier als elektromotorisch betriebenes Koch-Mix-Gerät ausgebildet ist. Die Küchenmaschine 1 weist in üblicher Weise ein Gehäuse auf, in welches ein Zubereitungsgefäß 7 einsetzbar ist. Dem Zubereitungsgefäß 7 ist ein Rührwerk 6 zugeordnet, welches beispielsweise als Messersatz ausgebildet ist und in das Zubereitungsgefäß 7 hineinragt. Darüber hinaus kann dem Zubereitungsgefäß 7 eine Heizeinrichtung zugeordnet sein. Insbesondere ist diese in dem Boden des Zubereitungsgefäßes 7 angeordnet. Das Gehäuse der Küchenmaschine 1 weist des Weiteren Projektionsflächen 5 auf, welche im Wesentlichen plan ausgebildet sind und keine Spalten, Ritzen oder dergleichen aufweisen. Vorteilhaft sind die Projektionsflächen 5 aus einem sichtbares Licht reflektierenden Material ausgebildet, so dass sich diese zur Darstellung einer darauf projizierten Information eignen.

Figur 2 zeigt die Küchenmaschine 1 in einem angeschalteten Zustand. Dabei weist eine der Projektionsflächen 5 zwei Markierungselemente 8 auf, welche mit einem Abstand d zueinander beabstandet sind. Jedes der beiden Markierungselemente 8 weist eine Mehrzahl von Markierungsteilelementen 9 auf, welche nebeneinander und übereinander nach der Art eines Arrays angeordnet sind. Die Markierungsteilelemente 9 bilden Zeilen und Spalten aus, wobei in derselben Zeile angeordnete Markierungsteilelemente 9 gleich groß ausgebildet sind und in einer Spalte angeordnete Markierungsteilelemente 9 von der ersten Zeile ausgehend bis zu der untersten Zeile eine zunehmende Größe aufweisen. Die Markierungselemente 8 sind hier als grünes Licht emittierende Leuchtdioden ausgebildet.

Die dargestellte Bilderzeugungseinrichtung 3 ist nach der Art einer Brille ausgebildet, an deren Gestell eine Detektionseinrichtung 10 (hier eine Kamera) eine Lichtquelle 4 sowie eine Auswerte- und Steuereinrichtung 11 (Prozessor) angeordnet sind. Der Lichtquelle 4 ist vorteilhaft eine optische Einrichtung (nicht dargestellt) zugeordnet, welche das von der Lichtquelle 4 emittierte Licht fokussiert und/oder umlenkt, so dass das emittierte Licht entweder in ein Auge eines Nutzers der Küchenmaschine 1 oder auf eine Projektionsfläche 5 der Küchenmaschine 1 projiziert wird. Die Detektionseinrichtung 10 weist darüber hinaus einen Detektionsbereich auf, welcher im Wesentlichen dem Sichtfeld des Nutzers entspricht und die Küchenmaschine 1, insbesondere auch die Markierungselemente 8, beinhaltet.

In Figur 3 sind die Bilderzeugungseinrichtung 3 und die Markierungselemente 8 im Detail dargestellt. Die beiden Markierungselemente 8 weisen jeweils eine gleiche Höhe h und Breite b auf und sind in einem Abstand d zueinander angeordnet. Die Anordnung der Markierungsteilelemente 9 eines jeden Markierungselementes 8 ergibt sich wie zuvor in Bezug auf Figur 2 erläutert.

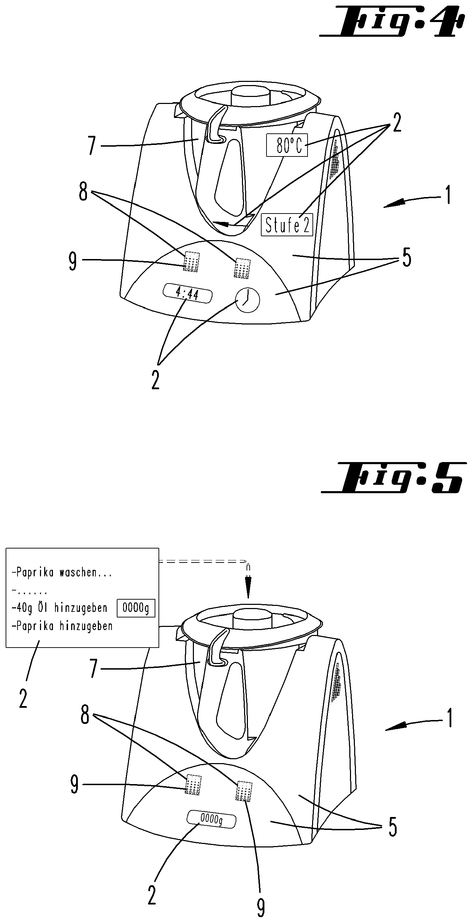

Die Figuren 4 bis 7 zeigen unterschiedliche Darstellungen von Informationen 2 auf den Projektionsflächen 5 der Küchenmaschine 1.

Die auf die Projektionsflächen 5 projizierten Informationen 2 beinhalten mit Bezug zu Figur 4 eine Zeitspanne eines Zubereitungsschrittes der Küchenmaschine 1, eine aktuelle Uhrzeit, eine Drehrichtung und Drehzahlstufe des Rührwerks 6 der Küchenmaschine 1 sowie eine aktuelle Temperatur der Heizeinrichtung der Küchenmaschine 1.

Gemäß Figur 5 beinhalten die Informationen 2 einen Zubereitungsschritt eines Rezeptes zur Zubereitung des Zubereitungsgutes sowie ein Gewicht eines in dem Zubereitungsgefäß 7 der Küchenmaschine 1 enthaltenen Zubereitungsgutes.

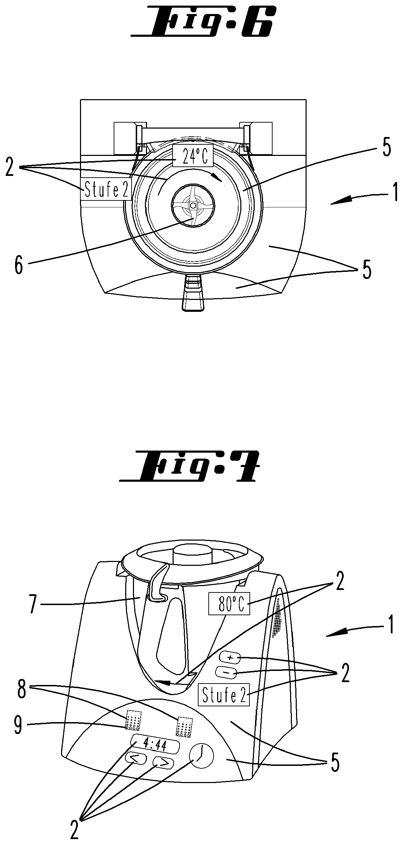

Figur 6 zeigt die Küchenmaschine 1 in einer Draufsicht, wobei das Zubereitungsgefäß 7 mit einem Deckel verschlossen ist. Eine auf dem Deckel ausgebildete Projektionsfläche 5 weist eine Information 2 über die aktuelle Drehzahlstufe und Drehrichtung des Rührwerkes 6 sowie eine aktuelle Temperatur der Heizeinrichtung des Zubereitungsgefäßes 7 auf.

Figur 7 zeigt eine Küchenmaschine 1 in einer perspektivischen Darstellung, wobei zwei Projektionsflächen 5 Berührungssensoren aufweisen, auf welche örtlich korrespondierend Informationen 2 projiziert sind. Die Informationen 2 beinhalten hier virtuelle Bilder von Stelleinrichtungen zur Änderung einer Zubereitungszeit beziehungsweise einer Drehzahlstufe. Darüber hinaus beinhalten die projizierten Informationen 2 eine Zeitspanne, eine Uhrzeit, eine Drehrichtung des Rührwerkes 6 sowie eine aktuelle Temperatur einer dem Zubereitungsgefäß 7 zugeordneten Heizeinrichtung.

Im Einzelnen funktioniert die Erfindung so, dass ein Nutzer der Küchenmaschine 1 die Bilderzeugungseinrichtung 3 nach der Art eines Brillengestells vor seinen Augen platziert. Mit Hilfe von üblichen An- und Ausschaltern schaltet der Nutzer sowohl die Bilderzeugungseinrichtung 3 als auch die Küchenmaschine 1 aktiv. Durch das Anschalten der Küchenmaschine 1 erscheinen auf dem Gehäuse der Küchenmaschine 1 die beiden Markierungselemente 8, welche einer der Projektionsflächen 5 zugeordnet sind. Die Markierungselemente 8 sind als LEDs ausgebildet und emittieren hier grünes Licht.

Der Nutzer der Küchenmaschine 1 blickt auf die Küchenmaschine 1, so dass diese in dem Sichtfeld seiner Augen angeordnet ist. Dadurch befindet sich die Küchenmaschine 1 gleichzeitig auch in dem Detektionsbereich der Detektionseinrichtung 10, welche ein Bild der Küchenmaschine 1 entsprechend dem aktuellen Blickwinkel des Nutzers zu der Küchenmaschine 1 aufnimmt. Dieses Bild wird von der Detektionseinrichtung 10 an die Auswerte- und Steuereinrichtung 11 übermittelt, welche das Bild in Bezug auf die Position und Orientierung der Markierungselemente 8 auf dem Gehäuse der Küchenmaschine 1 auswertet. Anhand der Größe und Abstände der nebeneinander angeordneten Markierungsteilelemente 9 der Markierungselemente 8 kann die Auswerte- und Steuereinrichtung 11 die Entfernung der Bilderzeugungseinrichtung 3 zu der Küchenmaschine 1 sowie den Blickwinkel der Bilderzeugungseinrichtung 3 zu der Küchenmaschine 1 erkennen. Hierzu werden die detektierten Markierungselemente 8 mit in der Auswerte- und Steuereinrichtung 11 beziehungsweise einem zugeordneten Speicher hinterlegten Referenzdaten verglichen.

Des Weiteren messen Sensoren der Küchenmaschine 1 kontinuierlich aktuelle Betriebsparameter der Küchenmaschine 1 und Zubereitungsparameter des in dem Zubereitungsgefäß 7 angeordneten Zubereitungsgutes. Die Betriebsparameter sind hier beispielsweise eine Drehrichtung sowie eine Drehzahlstufe des Rührwerkes 6, eine aktuelle Temperatur der Heizeinrichtung und eine Zeitangabe bis zur Beendigung eines aktuellen Zubereitungsschrittes. Darüber hinaus beinhalten die auf die Projektionsflächen 5 projizierten Informationen 2 zusätzlich Zubereitungsparameter des Zubereitungsgutes, nämlich hier ein aktuelles Gewicht einer in das Zubereitungsgefäß 7 einzufüllenden Zutat und einen nächsten Zubereitungsschritt eines Rezeptes.

Die Sensoren der Küchenmaschine 1 übermitteln die gemessenen Betriebsparameter beziehungsweise Zubereitungsparameter an die Auswerte- und Steuereinrichtung 11 der Bilderzeugungseinrichtung 3. Dies erfolgt hier mittels einer zwischen der Küchenmaschine 1 und der Auswerte- und Steuereinrichtung 11 bestehenden Funkverbindung.

Die Auswerte- und Steuereinrichtung 11 der Bilderzeugungseinrichtung 3 ermittelt daraufhin ein für entsprechende Betriebsparameter beziehungsweise Zubereitungsparameter in dem Datenspeicher der Bilderzeugungseinrichtung 3 hinterlegte Steuerbefehle, mittels welcher die Lichtquelle 4 so gesteuert werden kann, dass eine entsprechende Information 2 emittiert und auf die Projektionsflächen 5 der Küchenmaschine 1 projiziert wird. Gleichzeitig wird berücksichtigt, in welchem Blickwinkel sich die Küchenmaschine 1 beziehungsweise die Projektionsflächen 5 zu der Bilderzeugungseinrichtung 3 und damit gleichzeitig auch zu der Lichtquelle 4 befinden. Dies beinhaltet auch eine Unterscheidung der Ansicht, beispielsweise eine aktuelle seitliche Ansicht oder eine Draufsicht der Küchenmaschine 1.

Die Auswerte- und Steuereinrichtung 11 der Bilderzeugungseinrichtung 3 ermittelt dementsprechend die aktuelle Orientierung der Küchenmaschine 1 und die dabei zur Verfügung stehenden Projektionsflächen 5 der Küchenmaschine 1, welche zur Anzeige der Information 2 verwendet werden können. Hierbei wird die jeweilige Information 2 auf diejenige Projektionsfläche 5 der Küchenmaschine projiziert, welche mit dem Betriebsparameter beziehungsweise Zubereitungsparameter korrespondiert. Gemäß Figur 4 werden beispielsweise die Drehzahlstufe und Drehzahlrichtung des Rührwerkes auf einer Projektionsfläche 5 angezeigt, welche dem Rührwerk 6 des Zubereitungsgefäßes 7 naheliegt. Gleiches gilt für die aktuelle Temperatur der Heizeinrichtung des Zubereitungsgefäßes 7. In Bezug auf den in Figur 5 angezeigten Zubereitungsschritt eines Rezeptes wird die Information 2 neben der Küchenmaschine 1 angezeigt, wobei ein Pfeil in Richtung der Einfüllöffnung des Zubereitungsgefäßes 7 weist. Hieraus ergibt sich für den Nutzer der Küchenmaschine 1, dass eine Zutat in das Zubereitungsgefäß 7 einzubringen ist. Gleichzeitig wird mit dem Zubereitungsschritt ein aktuelles Gewicht der hinzuzufügenden Zutat angezeigt.

In dem gezeigten Ausführungsbeispiel werden die Informationen 2 nicht tatsächlich auf die Projektionsflächen 5 projiziert, sondern vielmehr in das Auge des Nutzers, wodurch sich die Informationen 2 mit seinem Sichtfeld überlagern, so dass der Nutzer den Eindruck erlangt, dass die Informationen 2 tatsächlich auf den Projektionsflächen 5 angezeigt werden. Hierdurch ergibt sich ein zu einem üblichen aktiven Display ähnlicher Sinneseindruck. Alternativ könnten die Informationen 2 jedoch auch auf die Projektionsflächen 5 projiziert werden.

Die projizierten Informationen 2 beinhalten darüber hinaus virtuelle Bilder von Stelleinrichtungen zur Änderung der Betriebsparameter "Drehzahlstufe" und "Zubereitungszeit". Diese Bilder sind üblichen Drucktastern nachgebildet. Die betreffenden Projektionsflächen 5 weisen dabei Berührungssensoren auf, welche hier beispielsweise in das Material des Gehäuses der Küchenmaschine 1 integriert sind. Durch eine Berührung der Projektionsflächen 5 werden die Berührungssensoren betätigt und der zugeordnete Betriebsparameter verändert, beispielsweise die Drehzahlstufe erhöht oder gesenkt beziehungsweise die Zubereitungszeit erhöht oder gesenkt. Bei einer Betätigung der Projektionsflächen 5 werden gleichzeitig auch die Informationen 2 aktualisiert, d.h. die Anzeige der Drehzahlstufe beziehungsweise Zubereitungszeit.

**Liste der Bezugszeichen**

| | | | |
|---|---|---|---|
| 1 | Küchenmaschine | b | Breite |
| 2 | Information | d | Abstand |
| 3 | Bilderzeugungseinrichtung | h | Höhe |
| 4 | Lichtquelle | | |
| 5 | Projektionsfläche | | |
| 6 | Rührwerk | | |
| 7 | Zubereitungsgefäß | | |
| 8 | Markierungselement | | |
| 9 | Markierungsteilelement | | |
| 10 | Detektionseinrichtung | | |
| 11 | Auswerte- und Steuereinrichtung | | |

## Patentansprüche

1. Verfahren zum Betrieb einer elektromotorisch angetriebenen Küchenmaschine (1) zum Zubereiten eines Zubereitungsgutes, wobei das Zubereitungsgut durch einen oder mehrere aufeinanderfolgende Zubereitungsschritte zubereitet wird, wobei ein Nutzer der Küchenmaschine (1) eine einen Betriebsparameter der Küchenmaschine (1) und/oder einen Zubereitungsparameter des Zubereitungsgutes betreffende Information (2) von der Küchenmaschine (1) empfängt und/oder an die Küchenmaschine (1) übermittelt, **dadurch gekennzeichnet, dass** die Information (2) mit Hilfe einer separat zu der Küchenmaschine (1) ausgebildeten tragbaren Bilderzeugungseinrichtung (3), insbesondere einer vor einem Auge getragenen brillenartigen Konstruktion, in das Sichtfeld des Nutzers projiziert wird, wenn der Nutzer in einem definierten Winkelbereich auf die Küchenmaschine (1) blickt, wobei sich die Information (2) mit dem Sichtfeld überlagert.

2. Verfahren nach Anspruch 1, **dadurch gekennzeichnet, dass** die Bilderzeugungseinrichtung (3) die Information mittels einer Lichtquelle (4) auf eine Projektionsfläche (5) der Küchenmaschine (1), auf eine vor dem Auge getragene und somit im Sichtfeld liegende transparente Fläche und/oder in ein Auge des Nutzers projiziert, insbesondere örtlich zugeordnet einem Teilbereich der Küchenmaschine (1) im Sichtfeld des Nutzers, welcher dem Betriebsparameter und/oder dem Zubereitungsparameter der Art nach zugeordnet ist.

3. Verfahren nach Anspruch 1 oder 2, **dadurch gekennzeichnet, dass** der Betriebsparameter der Küchenmaschine (1) und/oder der Zubereitungsparameter des Zubereitungsgutes mittels eines Sensors der Küchenmaschine (1) ermittelt und an die Bilderzeugungseinrichtung (3) übermittelt wird.

4. Verfahren nach einem der vorhergehenden Ansprüche, **dadurch gekennzeichnet, dass** der Betriebsparameter eine Drehzahl und/oder Drehrichtung eines Rührwerkes (6), eine Temperatur einer Heizeinrichtung und/oder eine Zeitangabe ist, und/oder dass der Zubereitungsparameter eine Temperatur und/oder ein Gewicht des Zubereitungsgutes und/oder ein Zubereitungsschritt eines Rezeptes zur Zubereitung des Zubereitungsgutes ist.

5. Verfahren nach einem der vorhergehenden Ansprüche, **dadurch gekennzeichnet, dass** die Bilderzeugungseinrichtung (3) eine Information (2) auf eine einen Berührungssensor aufweisende Projektionsfläche (5) der Küchenmaschine (1) oder auf eine einen Berührungssensor aufweisende vor dem Auge getragene und somit im Sichtfeld liegende, transparente Fläche projiziert, und dass der Nutzer die Küchenmaschine (1) durch Berührung der Projektionsfläche (5) steuert.

6. Verfahren nach einem der vorhergehenden Ansprüche, **dadurch gekennzeichnet, dass** die Bilderzeugungseinrichtung (3) die Information (2) in Abhängigkeit von einem Blickwinkel des Nutzers relativ zu der Küchenmaschine (1) projiziert.

7. Elektrisch angetriebene Küchenmaschine (1) mit einem Zubereitungsgefäß (7), einem dem Zubereitungsgefäß (7) zugeordneten Rührwerk (6) und/oder Heizelement und einer Kommunikationseinrichtung zur Kommunikation mit einem Nutzer der Küchenmaschine (1), insbesondere zum Übermitteln einer einen Betriebsparameter der Küchenmaschine (1) und/oder einen Zubereitungsparameter eines Zubereitungsgutes betreffenden Information (2), **dadurch gekennzeichnet, dass** die Kommunikationseinrichtung eine einen Berührungssensor aufweisende Projektionsfläche (5) zur Anzeige von Informationen aufweist, und dass der Kommunikationseinrichtung mindestens ein Markierungselement (8) zur Bestimmung einer räumlichen Orientierung der Küchenmaschine (1), insbesondere relativ zu einer externen Bilderzeugungseinrichtung (3), zugeordnet ist.

8. Küchenmaschine (1) nach Anspruch 7, **dadurch gekennzeichnet, dass** die Kommunikationseinrichtung mehrere in einem Abstand (d) angeordnete Markierungselemente (8) aufweist, welche jeweils eine Mehrzahl von zwei- oder dreidimensional nebeneinander angeordneten Markierungsteilelementen (9) aufweisen.

9. System aus einer Küchenmaschine (1), insbesondere einer Küchenmaschine (1) nach einem der Ansprüche 7 oder 8, und einer separat zu der Küchenmaschine (1) ausgebildeten tragbaren Bilderzeugungseinrichtung (3), insbesondere einem einem Auge eines Nutzers der Küchenmaschine (1) zugeordneten Projektor, wobei die Küchenmaschine (1) ein Zubereitungsgefäß (7), ein dem Zubereitungsgefäß (7) zugeordnetes Rührwerk (6) und/oder Heizelement und eine Kommunikationseinrichtung zur Kommunikation mit einem Nutzer der Küchenmaschine (1) und/oder mit der Bilderzeugungseinrichtung (3) aufweist, wobei die Kommunikationseinrichtung eine Projektionsfläche (5) zur Anzeige einer einen Betriebsparameter der Küchenmaschine (1) und/oder einen Zubereitungsparameter eines Zubereitungsgutes betreffenden, von der Bilderzeugungseinrichtung (3) projizierten Information (2) aufweist.

10. System nach Anspruch 9, **dadurch gekennzeichnet, dass** die Küchenmaschine (1) mindestens ein Markierungselement (8) zur räumlichen Orientierung der Bilderzeugungseinrichtung (3) relativ zu der Küchenmaschine (1), insbesondere relativ zu der Projektionsfläche (5), aufweist, wobei die Bilderzeugungseinrichtung (3) eine Detektionseinrichtung (10) zur Detektion des Markierungselementes (8), eine Auswerte- und Steuereinrichtung (11) zur Ermittlung der Orientierung der Bilderzeugungseinrichtung (3) relativ zu dem Markierungselement (8) und eine Lichtquelle (4) zur optischen Emission der Information (2) aufweist.

## Claims

1. A method for operating an electric motor-driven food processor (1) for preparing a preparation item, wherein the preparation item is prepared in one or more sequential preparation steps, wherein a user of the food processor (1) receives information (2) from the food processor (1) about an operating parameter for the food processor (1) and/or a preparation parameter for the preparation item and/or transmits said information to the food processor (1), **characterized in that** the information (2) is projected into the visual field of the user by means of a wearable image generating device (3) configured separately from the food processor (1), in particular an eyeglass-type construction worn in front of an eye while the user is looking at the food processor (1) in a defined angular range, wherein the information (2) is superimposed onto the visual field.

2. The method according to claim 1, **characterized in that** the image generating device (3) projects the information by means of a light source (4) onto a projection surface (5) of the food processor (1), on a transparent surface worn in front of the eye, and hence lying in the visual field, and/or into an eye of the user, in particular locally allocated to a partial area of the food processor (1) in the visual field of the user, which is allocated in terms of type to the operating parameter and/or to the preparation parameter.

3. The method according to claim 1 or 2, **characterized in that** the operating parameter for the food processor (1) and/or the preparation parameter for the preparation item is determined by a sensor of the food processor (1), and transmitted to the image generating device (3).

4. The method according to one of the preceding claims, **characterized in that** the operating parameter is a speed and/or a turning direction of a mixer (6), a temperature of a heating device and/or a time, and/or that the preparation parameter is a temperature and/or a weight of the preparation item and/or a preparation step in a recipe for preparing the preparation item.

5. The method according to one of the preceding claims, **characterized in that** the image generating device (3) projects information (2) onto a projection surface (5) of the food processor (1) exhibiting a touch sensor or onto a transparent surface worn in front of the eye that exhibits a touch sensor, and hence lies within the viewing field, and that the user controls the food processor (1) by touching the projection surface (5).

6. The method according to one of the preceding claims, **characterized in that** the image generating device (3) projects the information (2) as a function of a viewing angle of the user relative to the food processor (1).

7. An electrically driven food processor (1) with a preparation vessel (7), a mixer (6) and/or heating element allocated to the preparation vessel (7) and a communication device for communicating with a user of the food processor (1), in particular for transmitting information (2) about an operating parameter for the food processor (1) and/or a preparation parameter for a preparation item, **characterized in that** the communication device exhibits a projection surface (5) with a touch sensor for displaying information, and that the communication device has allocated to it at least one marking element (8) for determining a spatial orientation of the food processor (1), in particular relative to an external image generating device (3).

8. The food processor (1) according to claim 7, **characterized in that** the communication device exhibits several marking elements (8) spaced apart by distance (d), which each exhibit a plurality of two- or three-dimensional partial marking elements (9) situated one next to the other.

9. A system comprised of a food processor (1), in particular a food processor (1) according to one of claims 7 or 8, and a wearable image generating device (3) formed separately from the food processor (1), in particular a projector allocated to an eye of the user of the food processor (1), wherein the food processor (1) exhibits a preparation vessel (7), a mixer (6) and/or heating element allocated to the preparation vessel (7), and a communication device for communicating with a user of the food processor (1) and/or with the image generating device (3), wherein the communication device exhibits a projection surface (5) for displaying information (2) that relates to an operating parameter for the food processor (1) and/or a preparation parameter for a preparation item, and is projected by the image generating device (3).

10. The system according to claim 9, **characterized in that** the food processor (1) exhibits at least one marking element (8) for spatially orienting the image generating device (3) relative to the food processor (1), in particular relative to the projection surface (5), wherein the image generating device (3) exhibits a detection device (10) for detecting the marking element (8), an evaluation and control device (11) for determining the orientation of the image generating device (3) relative to the marking element (8), and a light source (4) for optically emitting the information (2).

## Revendications

1. Procédé pour faire fonctionner un robot de cuisine à moteur électrique (1) pour préparer un produit à préparer, dans lequel le produit à préparer est préparé par une ou plusieurs étapes de préparation successives, dans lequel un utilisateur du robot de cuisine (1) reçoit du robot de cuisine (1) et/ou transmet au robot de cuisine (1) une information (2) concernant un paramètre de fonctionnement du robot de cuisine (1) et/ou un paramètre de préparation du produit à préparer, **caractérisé en ce que** l'information (2), à l'aide d'un dispositif de formation d'image portable (3) formé séparément du robot de cuisine (1), en particulier une structure de type lunettes portée devant un oeil, est projetée dans le champ de vision de l'utilisateur lorsque l'utilisateur regarde le robot de cuisine (1) dans une plage angulaire définie, dans lequel l'information (2) se superpose au champ de vision.

2. Procédé selon la revendication 1, **caractérisé en ce que** le dispositif de formation d'image (3) projette l'information au moyen d'une source de lumière (4) sur une surface de projection (5) du robot de cuisine (1), sur une surface transparente portée devant l'oeil et se trouvant ainsi dans le champ de vision et/ou dans un oeil de l'utilisateur, en particulier associée localement à une zone partielle du robot de cuisine (1) dans le champ de vision de l'utilisateur à laquelle est associé le paramètre de fonctionnement et/ou le paramètre de préparation selon le cas.

3. Procédé selon la revendication 1 ou 2, **caractérisé en ce que** le paramètre de fonctionnement du robot de cuisine (1) et/ou le paramètre de préparation du produit à préparer est déterminé au moyen d'un capteur du robot de cuisine (1) et transmis au dispositif de formation d'image (3).

4. Procédé selon l'une des revendications précédentes, **caractérisé en ce que** le paramètre de fonctionnement est une vitesse de rotation et/ou un sens de rotation d'un agitateur (6), une température d'un dispositif de chauffage et/ou une indication de temps, et/ou **en ce que** le paramètre de préparation est une température et/ou un poids du produit à préparer et/ou une étape de préparation d'une recette pour la préparation du produit à préparer.

5. Procédé selon l'une des revendications précédentes, **caractérisé en ce que** le dispositif de formation d'image (3) projette une information (2) sur une surface de projection (5) comprenant un capteur tactile du robot de cuisine (1), ou sur une surface transparente comprenant un capteur tactile, portée devant l'oeil et se trouvant ainsi dans le champ de vision, et **en ce que** l'utilisateur commande le robot de cuisine (1) par contact avec la surface de projection (5).

6. Procédé selon l'une des revendications précédentes, **caractérisé en ce que** le dispositif de formation d'image (3) projette l'information (2) en fonction d'un angle de vision de l'utilisateur par rapport au robot de cuisine (1).

7. Robot de cuisine électrique (1) avec un récipient de préparation (7), un agitateur (6) et/ou un élément chauffant associé au récipient de préparation (7) et un dispositif de communication pour communiquer avec un utilisateur du robot de cuisine (1), en particulier pour transmettre une information (2) concernant un paramètre de fonctionnement du robot de cuisine (1) et/ou un paramètre de préparation du produit à préparer, **caractérisé en ce que** le dispositif de communication présente une surface de projection (5) comprenant un capteur tactile, pour afficher des informations, et **en ce qu'**est associé au dispositif de communication au moins un élément de marquage (8) pour déterminer une orientation spatiale du robot de cuisine (1), en particulier par rapport à un dispositif de formation d'image externe (3).

8. Robot de cuisine (1) selon la revendication 7, **caractérisé en ce que** le dispositif de communication comporte plusieurs éléments de marquage (8) espacés d'une distance (d), qui comportent chacun une pluralité de sous-éléments de marquage (9) agencés côte à côte en deux ou trois dimensions.

9. Système comprenant un robot de cuisine (1), en particulier un robot de cuisine (1) selon l'une des revendications 7 ou 8, et un dispositif de formation d'image portable (3) formé séparément du robot de cuisine (1), en particulier un projecteur associé à un oeil d'un utilisateur du robot de cuisine (1), dans lequel le robot de cuisine (1) comprend un récipient de préparation (7), un agitateur (6) et/ou un élément chauffant associé au récipient de préparation (7) et un dispositif de communication pour communiquer avec un utilisateur du robot de cuisine (1) et/ou le dispositif de formation d'image (3), dans lequel le dispositif de communication présente une surface de projection (5) pour afficher une information (2) projetée par le dispositif de génération d'image (3) concernant un paramètre de fonctionnement du robot de cuisine (1) et/ou un paramètre de préparation d'un produit à préparer.

10. Système selon la revendication 9, **caractérisé en ce que** le robot de cuisine (1) présente au moins un élément de marquage (8) pour l'orientation spatiale du dispositif de formation d'image (3) par rapport au robot de cuisine (1), en particulier par rapport à la surface de projection (5), dans lequel le dispositif de formation d'image (3) présente un dispositif de détection (10) pour la détection de l'élément de marquage (8), un dispositif d'évaluation et de commande (11) pour déterminer l'orientation du dispositif de formation d'image (3) par rapport à l'élément de marquage (8) et une source de lumière (4) pour l'émission optique de l'information (2).
